Europäisches Patentamt

European Patent Office

Office européen des brevets

(11) Numéro de publication: **0 374 395 B1**

# FASCICULE DE BREVET EUROPEEN

(45) Date de publication de fascicule du brevet: **15.06.94**   (51) Int. Cl.⁵: **G01N 29/04**

(21) Numéro de dépôt: **89118764.3**

(22) Date de dépôt: **10.10.89**

(54) **Procédé et dispositif pour le positionnement précis d'un organe déplacé le long d'un rail de voie ferrée transversalement par rapport à ce rail.**

(30) Priorité: **19.12.88 CH 4677/88**

(43) Date de publication de la demande:
**27.06.90 Bulletin 90/26**

(45) Mention de la délivrance du brevet:
**15.06.94 Bulletin 94/24**

(84) Etats contractants désignés:
**AT BE CH DE ES FR GB GR IT LI LU NL SE**

(56) Documents cités:
**WO-A-85/04485**
**DE-A- 3 227 130**
**FR-A- 2 199 887**
**FR-A- 2 391 470**
**US-A- 4 235 112**

(73) Titulaire: **SPENO INTERNATIONAL S.A.**
**Case Postale 16**
**22-24, Parc Château-Banquet**
**CH-1211 Genève 21(CH)**

(72) Inventeur: **Panetti, Romolo**
**24, Parc Château-Banquet**
**CH-1202 Genève(CH)**

(74) Mandataire: **Micheli & Cie**
**Rue de Genève 122,**
**Case Postale 61**
**CH-1226 Genève-Thonex (CH)**

## Description

L'invention concerne un procédé et un dispositif pour le positionnement précis, transversalement par rapport à un rail de voie ferrée, d'un organe se déplaçant le long de ce rail et notamment d'un support pour sondes ultrasonores utilisées pour le contrôle non destructif des rails.

Les contraintes et les surcharges dynamiques auxquelles une voie ferrée est soumise provoquent le développement de défauts internes dans les rails, tels que taches ovales, fissures horizontales, transversales ou longitudinales, étoilures, etc.

Il est important de pouvoir détecter ces défauts en voie ou en atelier par une méthode non destructrice, afin de pouvoir changer les portions de rails défectueux.

La méthode la plus répandue de contrôle non destructif de l'état interne des rails en voie ou en atelier est l'auscultation du rail par ultrasons. Cette technique consiste à mettre en contact avec le champignon du rail des sondes émettrices, réceptrices ou émettrices-réceptrices dont l'orientation est adaptée aux types de défauts que l'on recherche.

Les échos captés des ultrasons émis sont généralement visualisés sur des écrans cathodiques. Ces échos sont également enregistrés graphiquement, ce qui permet la détermination de la position et de la nature des défauts détectés. L'interprétation des défauts s'effectue également à l'aide d'une calculatrice digitale dont l'imprimante délivre un rapport direct sur l'emplacement et la nature des défauts.

Dans le cas du contrôle en voie les sondes peuvent être installées sur des chariots, roulant sur les rails, et maintenues en contact sonore avec le métal du rail par l'intermédiaire d'un film d'eau. On peut également utiliser des sondes placées dans une roue roulant sur le rail, le contact sonore entre la sonde et la bande de roulement étant assuré par exemple par un liquide enfermé dans la roue, comme décrit dans le brevet US 4.165.648.

Les sondes à utiliser et leur positionnement sont déterminés par les caractéristiques des défauts à détecter. En exploitation, il est important que chaque sonde reste constamment postionnée avec précision par rapport au rail de la voie auscultée.

Pour les sondes travaillant avec un faisceau réfléchi sous incidence non nulle sous le patin du rail, l'espacement longitudinal doit être fonction de la hauteur du rail pour une bonne réception. Pour les sondes destinées à rechercher les défauts de l'âme du rail, relativement étroite, c'est leur positionnement transversal par rapport à l'axe du rail qui doit être assuré avec précision.

Dans certaines réalisations existantes, le positionnement latéral des sondes par rapport au rail est réalisé par l'appui forcé, par un vérin ou un ressort, d'une pièce mécanique rigidement liée au chariot porte-sondes, contre la face latérale interne du champignon du rail considérée comme référence géométrique transversale du profil du rail.

Ces réalisations présentent des inconvénients importants liés à la diversité des largeurs des champignons des rails posés en voie, provenant aussi bien des différents types de rails posés que des divers degrés d'usure latérale ou surlargeur dus à l'écrasement des champignons de rails. Les sondes sont ainsi mal positionnées et ne peuvent garantir une bonne qualité du contrôle.

Il existe sur certaines réalisations des commandes manuelles du positionnement transversal et/ou longitudinal des sondes. Ces équipements ne donnent toutefois pas satisfaction, car ces commandes doivent être actionnées en fonction d'une observation visuelle de l'état du champignon du rail, ce qui ne peut conduire qu'à un résultat approximatif et est illusoire à partir d'une certaine vitesse de déplacement du véhicule de contrôle.

Le brevet US 4,044,594 décrit un dispositif d'auscultation d'un rail au moyen d'une seule sonde logée dans une roue, nécessitant un système complexe de régulation pour corriger les variations latérales et les variations angulaires de la roue résultant des irrégularités de la surface du rail. Un tel dispositif ne peut fonctionner efficacement à des vitesses relativement élevées.

La demande de brevet européen publiée No 0 160 591 décrit un procédé et un dispositif d'auscultation d'un rail au moyen de sondes à ultrasons glissant sur le rail et en contact sonore avec celui-ci selon lesquels la position d' au moins une des sondes est asservie aux variations d'intensité d'un faisceau ultrasonore réfléchi par la surface inférieure de la semelle du rail. Selon ce document on peut asservir aussi bien la position longitudinale que transversale par rapport à la voie ferrée de ladite sonde.

Le brevet US 4,235,112 révèle un dispositif à ultrasons en contact avec le rail et qui comprend un émetteur d'ultrasons disposé entre deux récepteurs latéraux d'ultrasons destinés à capter les faisceaux d'ultrasons réfléchis par la semelle et l'âme du rail.

Ainsi les documents US 4,044,594, US 4,235,112 et EP 0 160 591 proposent l'utilisation de la réflexion d'un ou de deux faisceaux ultrasonores sur la face inférieure de la semelle du rail. Il sont bases sur la mesure de l'intensité ou de l'énergie de ces faisceaux ultrasonores réfléchis ce qui n'est pas fiable. En effet l'énergie de ces faisceaux ultrasonores réfléchis est modifiée, perturbée par les défauts se trouvant dans l'âme du rail et dans sa semelle tel par exemple les fissures ou les trous d'éclisses. De plus la surface inférieure de la semelle du rail est toujours plus ou moins corrodée et rouillée, corrosion qui provoque également des modifications d'intensité ou d'énergie des faisceaux ultrasonores réfléchis. De ce fait ces dispositifs existants ne permettent pas un positionnement automatique précis des sondes dans leurs positions longitudinales ou transversales optimales par rapport au champignon du rail de sorte que les résultats de l'auscultation ultrasonore des rails par ces méthodes est entachée d'erreurs.

Le document Fr 2'391'470 se réfère à un procédé et un dispositif pour le repérage et la poursuite automatique d'un joint soudé et comprend, à cet effet, au moins deux générateurs d'ultrasons disposés à une certaine distance de la surface de l'objet à contrôler. Suivant un mode d' exécution, ces générateurs émettent des faisceaux convergeants. En tenant compte des différentes distances mesurées séparant les générateurs de la surface supérieure de l'objet à contrôler, le joint soudé peut être détecté et suivi. Ce procédé par réflexion superficielle ne pourra être appliqué au positionnement d'un organe déplacé le long d'un rail, car la surface supérieure du champignon du rail à contrôler présente une structure et forme inégale ou partiellement usée qui ne peut donc servir de surface de référence.

Il existe d'autres applications pour lesquelles il est impératif de positionner avec précision transversalement par rapport au rail un organe tracté le long d'une voie ferrée, que cet organe porte des moyens de mesure, d'auscultation ou de reprofilage du rail.

Pour toutes ces applications la présente invention apporte une solution au problème posé.

Le procédé et de dispositif selon la présente invention remédient aux inconvénients précités en ce que l'asservissement du positionnement, notamment transversal, de l'organe déplacé le long du rail par rapport à l'axe de ce rail est rendu indépendant de l'intensité des faisceaux ultrasonores réfléchis et des défauts de l'âme du rail ou de la corrosion de la surface inférieure de sa semelle, ainsi que de la forme et de l'usure de la surface de roulement du champignon de rail.

Le procédé et le dispositif objets de la présente invention se distinguent par les caractéristiques décrites et revendiquées ci-après.

Le dessin annexé illustre schématiquement et à titre d'exemple le procédé et le dispositif de positionnement transversal d'une sonde d' auscultation d'un rail d'une voie ferrée selon l'invention.

La figure 1 représente la sonde d'asservissement centrée sur l'axe de symétrie du rail.

La figure 2 illustre l'effet d'un déplacement transversal "d" par rapport à l'axe du champignon du rail de la sonde d'asservissement.

La figure 3 représente la sonde d'asservissement décalée d'une valeur "X" vers la gauche par rapport à l'axe du champignon du rail.

La figure 4 est une vue de côté d'un chariot porte-sondes équipé du dispositif de positionnement transversal selon l'invention.

La figure 5 est une coupe suivant la ligne A-A de la figure 4.

La figure 6 illustre le schéma bloc du dispositif d'asservissement selon l'invention.

La figure 7 est un diagramme en fonction du temps "t" illustrant les impulsions émises "E" et les ondes reçues "R" par la sonde d'asservissement.

Le présent procédé de positionnement, transversalement par rapport à l'axe longitudinal d'un rail, d'un organe déplacé le long dudit rail et portant par exemple des sondes d'auscultation de ce rail par ultrasons, consiste à monter sur un support portant les sondes d'auscultation du rail une sonde d'asservissement de la position transversale de ce support par rapport à l'axe longitudinal du rail. Cette sonde d'asservissement est formée de deux sondes émettrices-réceptrices formant un angle entre-elles et logées dans un patin glissant sur la surface du roulement du rail et mis en contact sonore avec celui-ci par exemple à l'aide d'un film d'eau. Ces sondes émettrices-réceptrices émettant chacune un faisceau ultrasonore intermittent ou train d'impulsions sensiblement perpendiculaire à chacune des portées d'éclisse du rail sur lesquelles ils sont réfléchis. Puis on mesure le temps de parcours de chacun des faisceaux ou impulsions ultrasonores c'est-à-dire en fait la distance de chacune des sondes à la portée d'éclisse correspondante, la vitesse de transmission des ultrasons dans l'acier étant connue.

Les faisceaux d'ondes ultrasonores sont constitués par des trains d'impulsions, ils sont donc intermittents lorsque l'organe est déplacé de façon continue le long du rail. Pour des mesures à l'arrêt en plusieurs endroits différents du rail ces faisceaux pourraient ne comporter qu'une impulsion. De plus ces faisceaux sont synchronisés, généralement de telle manière que les impulsions de chaque faisceau soient émises simultanément.

On mesure donc l'intervalle de temps séparant une impulsion du premier faisceau de la réception de son écho et on le compare à l'intervalle de temps entre l'impulsion correspondante du second faisceau et la réception de son écho.

On calcule ensuite la différence de ces distances, soit des temps de parcours de ces deux faisceaux, qui sert à élaborer un signal de commande d'un dispositif de positionnement transversal des sondes ou du support de sondes.

Ce faisant on élimine tous les défauts des systèmes existants décrits dans l'introduction du présent brevet car la mesure est indépendante de l'énergie ou de l'intensité des faisceaux et donc des défauts internes du rail ainsi que des défauts de la semelle de ce rail puisque celle-ci n'est plus utilisée pour la réflexion des faisceaux ultrasonores.

Ce procédé d'asservissement de la position transversale des sondes présente en outre les avantages suivants :

- Les signaux ou faisceaux ultrasonores sont très peu amortis car la longueur du parcours de ceux-ci dans l'acier est faible. Seule l'épaisseur du champignon du rail est traversée et non pas toute la hauteur du rail, âme comprise, comme celà est le cas dans les dispositifs préexistants.
- L'expérience montre indubitablement que les portées d'éclisse présentent des surfaces peu altérées car elles ne sont soumises ni à l'usure ni à la corrosion. La réflexion sur ces surfaces est donc de bonne qualité et sensiblement constante en tout point du rail. De plus l'inclinaison des portées d'éclisse est pratiquement la même quel que soit le type de rail de sorte qu'une même sonde d'asservissement, c'est-à-dire deux sondes émettrices-réceptrices formant un angle constant entre elles, peut être utilisée sur n'importe quel type de rail.
- Le centrage des sondes peut être effectué sur l'axe de symétrie du rail mais également, en introduisant une valeur de consigne différente de zéro, sur des droites parallèles à cet axe de symétrie. On peut donc positionner les sondes non seulement dans le plan de symétrie du rail mais également dans des plans parallèles à celui-ci décalés latéralement ce qui est utile voir nécessaire pour l'auscultation de certaines zones du champignon du rail.
- La mesure étant de type différentielle elle n'est pas influencée par la valeur absolue du temps de parcours des faisceaux ultrasonores et devient donc totalement indépendante de l'usure ou de l'épaisseur du champignon du rail.
- Comme les faisceaux ultrasonores émis par la sonde d'asservissement sont légèrement divergents une petite variation de l'angle que forme la portée d'éclisse avec un plan perpendiculaire au plan de symétrie du rail, soit parallèle à sa surface de roulement, n'a pas d'influence sur le résultat de la mesure.

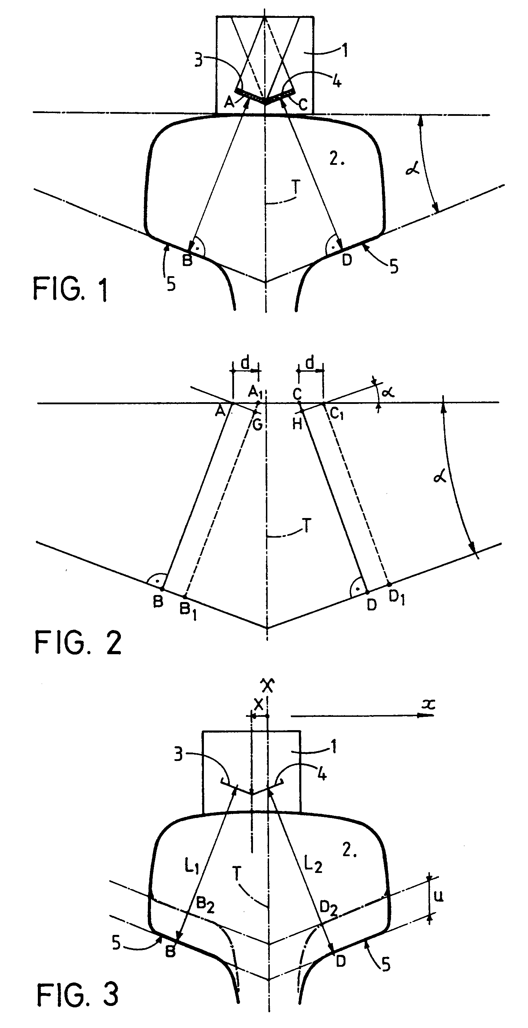

Les figures 1 à 3 illustrent le principe du procédé de positionnement qui vient d'être décrit.

Sur la figure 1 on voit un support de sondes 1 glissant sur la table de roulement du champignon 2 du rail. Ce support 1 porte la sonde d'asservissement formée par les deux transducteurs à ultrasons émetteurs-récepteurs 3,4 qui forment un angle entre eux sensiblement égal à l'angle 180° - 2 $\alpha$ où $\alpha$ est l'angle que forment les portées d'éclisse 5 avec la table de roulement du champignon du rail.

Dans cette représentation le support 1, et donc la sonde d'asservissement 3,4, est centré sur l'axe ou le plan T de symétrie du rail 2 de sorte que les distances ABA d'une part et CDC d'autre part parcourues par les faisceaux de chacune des sondes 3,4 sont égales. Les temps mis pour parcourir ces distances sont donc également égaux et leur différence est nulle. Dans ce cas et pour autant que la valeur de consigne du dispositif d'asservissement de la position du support 1 soit égale à zéro, le signal de commande de ce dispositif d'asservissement est égal à zéro, les sondes étant correctement positionnées.

La figure 2 représente l'effet d'un déplacement de valeur "d" du support 1 parallèlement à la surface de roulement du rail 2.

La distance AB devient $A_1 B_1$ soit $GB_1$ + $GA_1$ = AB + $GA_1$ et la distance CD devient $C_1 D_1$ soit CD - CH où $GA_1$ = CH = d • sin $\alpha$ .

Ainsi le trajet aller retour d'un faisceau est égal à $A_1 B_1$ + $B_1 A_1$ = 2AB + 2 • d • sin $\alpha$ ; pour l'autre faisceau il est égal à $C_1 D_1$ + $D_1 C_1$ soit 2CD - 2 • d • sin $\alpha$.

La différence de longueur entre les deux trajets est donc égale à :

$$\delta = 2AB + 2 \cdot d \cdot \sin \alpha - (2CD - 2 \cdot d \cdot \sin \alpha)$$ et comme
$$AB = CD$$
$$\delta = 4 \cdot d \cdot \sin \alpha$$

et la différence de temps correspondant est

$$\Delta t = 4 \cdot d \cdot \sin \alpha /_V$$

où V est la vitesse des ultrasons dans l'acier.

C'est ce signal $\Delta t$ qui sera comparé à la valeur de consigne déterminée de cas en cas en fonction de la position désirée du support 1 pour créer le signal de commande du dispositif de positionnement.

La figure 3 illustre le cas d'un décentrage du support 1 d'une valeur "X" vers la gauche ("X" négatif). Dans ce cas $L_1$ est plus petit que $L_2$, la différence $\delta$ = $L_1$ - $L_2$ est négative et $\Delta t$ également. On voit donc que l'on sait automatiquement de quel côté du plan "T" de symétrie du rail se trouve l'axe du support 1 de par le signe du signal $\Delta t$ ou de $\delta$.

Sur cette figure on voit également qu'une usure "U" du champignon 2, ayant pour résultat de réduire son épaisseur, est sans effet sur la mesure et donc sur le positionnement ou le centrage du support 1. En effet le trajet du premier faisceau sera diminué de deux fois $BB_2$ et celui du second faisceau de deux fois $DD_2$. Comme les distances $BB_2$ et $DD_2$ sont égales la différence des trajets et des temps de parcours de ceux-ci restent inchangés.

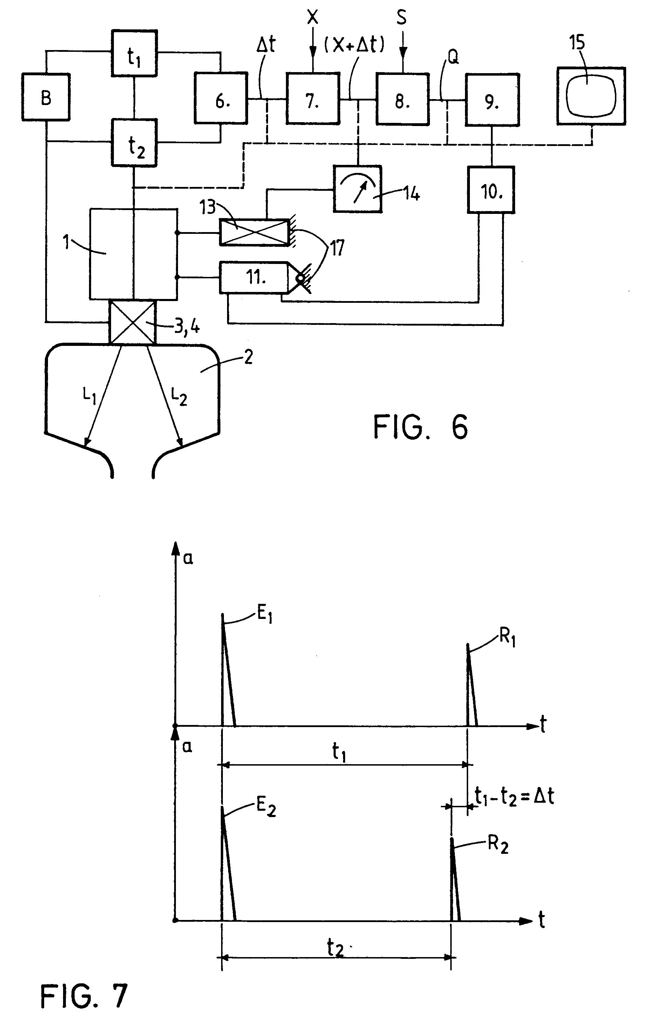

La figure 7 est un diagramme illustrant en fonction du temps les impulsions $E_1$, $E_2$ émises par les deux sondes 3,4 et leurs échos $R_1$, $R_2$ reçus après les temps $t_1$, respectivement $t_2$ dépendant de la longueur des distances $L_1$ et $L_2$.

Il est évident que l'énergie ou l'intensité des échos R est de moindre amplitude que celle des impulsions émises E mais cela n'affecte en rien la mesure des temps $t_1$, $t_2$ qui ne sont en rien liés à ces niveaux d'énergie.

La figure 6 illustre un schéma bloc du dispositif de positionnement et d'asservissement d'un support 1 par rapport à l'axe du champignon du rail 2.

Le support 1 porte la sonde d'asservissement 3,4 qui est en contact sonore avec le rail 2. Les longueurs $L_1$ et $L_2$ représentent la moitié du chemin parcouru par les faisceaux d'ultrasons émis et reçus par dessus des sondes 3,4.

Cette sonde d'asservissement 3,4 émettrice-réceptrice associée à une base de temps B permet de déterminer les temps $t_1$, $t_2$ séparant l'émission des impulsions $E_1$, $E_2$ de leurs échos $R_1$, $R_2$ des sondes 3,4. Ces temps $t_1$, $t_2$ sont comparés par un comparateur 6 délivrant un signal $\Delta t = t_1 - t_2$. Ce signal $\Delta t$ est additionné à un signal de consigne X par un additionneur 7 qui délivre le signal $(X + \Delta t)$ de commande de positionnement du support 1. La valeur absolue de ce signal de commande $(X + \Delta t)$ est comparée à un seuil S par un comparateur 8 qui ne délivre un signal d'asservissement Q que si la valeur absolue du signal de commande est plus grande que le seuil S préétabli en fonction des conditions particulières de travail état du rail vitesse de mesure, résonance du circuit mécanique et hydraulique de déplacement du support 1 par exemple. Ce signal d'asservissement Q est amplifié par une amplificateur 9 dont la sortie commande un servo-valve 10 commandant un vérin à double action 11 fixé d'une part au support 1 et d'autre part au cadre 17 porté par le chariot 18 roulant sur le rail et portant ledit support 1.

De plus un capteur linéaire 13 de déplacement relié à un indicateur 14 permet de contrôler la position transversale du support 1 par rapport au cadre 17 qui le porte. Ceci permet un centrage rapide de la sonde en début de travail et facilite son recentrage en travail après une perte de contact sonore. Un écran vidéo 15 permet de suivre le bon fonctionnement de la boucle de réglage et de ses divers éléments.

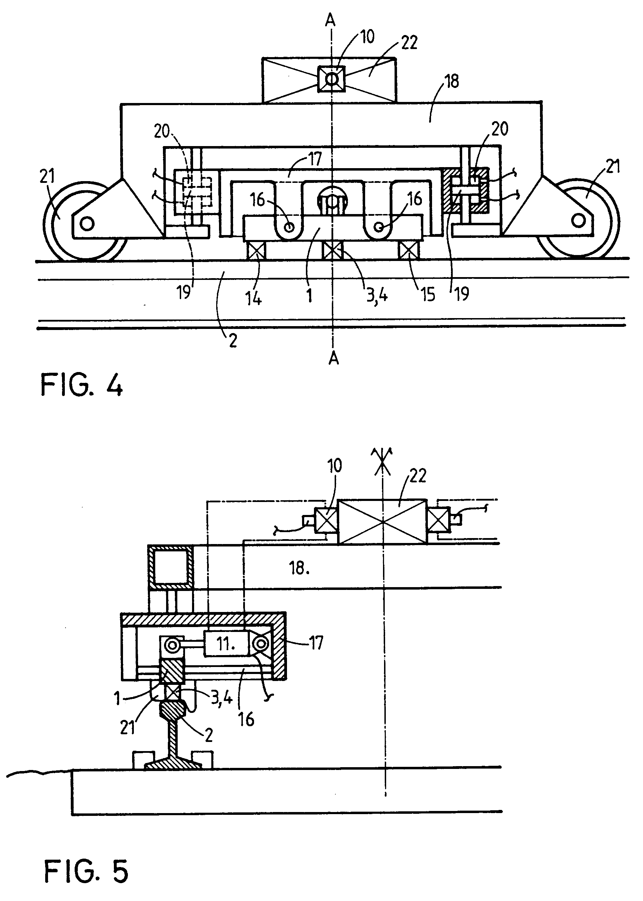

Les figures 4 et 5 illustrent schématiquement une forme d'exécution particulière du dispositif pour le positionnement précis de sondes ultrasonores d'auscultation d'un rail en voie ou en atelier selon l'invention. Le support 1 porte une sonde d'asservissement 3,4, formée comme on l'a vu de deux sondes émettrices-réceptrices formant un angle entre elles, ainsi que des sondes d'auscultation du rail 14,15. Ce support 1 est monté coulissant sur des tiges 16 situées suivant une direction perpendiculaire au plan de symétrie T du rail 2 et montées sur un cadre 17 déplaçable en hauteur par rapport à un chariot de guidage 18 à l'aide de deux vérins à double effet 19,20. Le chariot de guidage 18 est muni de galets à boudin 21 roulant sur le rail 2.

Le vérin 11 qui comporte le capteur de déplacement linéaire 13 commandé par la servo-valve 10 permet de déplacer le support 1 le long des tiges 16. Un caisson 22 solidaire du chariot 18 renferme la partie électronique et l'alimentation en fluide sous pression du dispositif décrit en référence à la figure 6, l'écran de contrôle 15 et l'indicateur 14 étant placés dans le poste de pilotage d'un véhicule ferroviaire par lequel le chariot 18 est tracté le long de la voie ferrée.

De nombreuses variantes de réalisations mécaniques d'un tel dispositif sont évidemment réalisables sas sortir du cadre de la protection revendiquée.

En particulier le support 1 pourrait porter des palpeurs mécaniques pour mesurer le profil longitudinal ou transversal du rail des outils de reprofilage ou tout autre élément qui doit pour son bon fonctionnement être positionné avec précision transversalement par rapport au rail.

Comme il ressort de ce qui précède, l'invention est utilisable aussi bien en voie qu'en atelier de régénération des rails.

**Revendications**

1. Procédé pour le positionnement d'un organe (1) déplacé le long d'un rail (2) de voie ferrée, transversalement par rapport au plan de symétrie (T) de ce rail, en émettant au moyen d'un dispositif (3,4) deux faisceaux d'ultrasons en captant les échos de ces faisceaux réfléchis par le rail, et en positionnant ledit organe (1) en fonction de la différence des distances parcourues par les deux faisceaux, caractérisés en ce qu'on dispose le dispositif (3,4) émettant les deux faisceaux d'ultrasons en contact sonore avec le rail, qu'on émet les deux faisceaux d'ultrasons a travers le champignon (2) du rail avec un angle $(2\alpha)$ prédéterminé entre eux, qu'on choisit ledit angle prédéterminé $(2\alpha)$ de façon que les deux faisceaux d'ultrasons soient sensiblement perpendiculaires aux portées d'éclisse (5), du rail et réfléchis par ces portées (5) qu'on détermine le temps de parcours ($t_1$, $t_2$) de chacun des deux faisceaux entre son émission et la réception de son echo, qu'on forme à partir de la différence ($\Delta t$) entre lesdits temps de parcours des deux faisceaux un premier signal dont la valeur est proportionnelle à ladite différence ($\Delta t$) et qui n'est influencé ni par la valeur absolue du temps de parcours ($t_1$, $t_2$) desdits faisceaux ni par l'épaisseur ou l'usure (u) du champignon (2) du rail et qu'on utilise ce premier signal pour l'élaboration d'un signal de commande du positionnement transversal dudit organe.

2. Procédé selon la revendication 1, caractérisé par le fait que l'élaboration du signal de commande de positionnement est effectué en additionnant un signal de consigne (x) audit premier signal.

3. Procédé selon la revendication 1 ou 2 caractérisé par le fait qu'on compare le signal de commande de positionnement à une valeur seuil (S) et qu'on utilise ce signal de commande pour ledit positionnement à condition que sa valeur dépasse la valeur seuil (S).

4. Procédé selon la revendication 3, caractérisé en ce que le signal de commande délivré est amplifié par un amplificateur dont la sortie commande une valve (10) contrôlant le positionnement dudit organe au moyen d'un vérin (11).

5. Procédé selon l'une des revendications 1 à 4 caractérisé par le fait qu'il est utilisé pour le centrage sur le plan de symétrie (T) d'un rail d'au moins une sonde d'auscultation à ultrasons du rail.

6. Procédé selon l'une des revendications 1 à 5 caractérisé par le fait que chaque faisceau d'ondes ultrasonores est constitué par un train d'impulsions.

7. Procédé selon la revendication 6 caractérisé par le fait que les trains d'ondes ultrasonores sont synchronisés.

8. Dispositif pour la mise en oeuvre du procédé selon la revendication 1 caractérisé par le fait qu'il comporte un chariot de guidage (18) roulant sur le rail muni d'un support (1), déplaçable transversalement par rapport à l'axe longitudinal du rail, portant une sonde d'asservissement (3,4) en contact sonore avec le rail; par le fait qu'il comporte des moyens de déplacement (10,11) du support (1) dans ses mouvements transversaux; et par le fait que la sonde d'asservissement comporte deux transducteurs émetteurs-récepteurs (3,4) formant un angle ($2\alpha$) entre eux, en contact sonore avec le rail, émettant des faisceaux ultrasonores à travers le champignon (2) du rail sensiblement perpendiculairement aux portées d'éclisse (5) sur lesquelles ils sont réfléchis, leurs échos étant captés par ledit transducteur émetteur-récepteur (3,4); ainsi qu'une boucle de réglage (6 à 9) asservissant les moyens de déplacement (10,11) du support (1) à un signal fonction de la différence du temps de parcours séparant l'émission et la réception de l'écho des deux faisceaux ultrasonores.

9. Dispositif selon la revendication 8 caractérisé par le fait que le support (1) porte des sondes à ultrasons pour l'auscultation du rail.

10. Dispositif selon la revendication 8 ou la revendication 9 caractérisé par le fait que la boucle de réglage comporte un comparateur (6) délivrant un signal correspondant à la différence du temps de parcours ($\Delta t$) alimentant un additionneur (7) introduisant une valeur de consigne et délivrant un signal de commande [f(x) + $\Delta t$].

11. Dispositif selon la revendication 10 caractérisé par le fait que la boucle de réglage comporte encore un inhibiteur supprimant le signal de commande tant que sa valeur est inférieure à un seuil préétabli (S).

**Claims**

1. A process on the positioning of a member (1) moved along the rail (2) of a railway, transversally with respect to the plane of symmetry (T) of this rail, by emitting by means of a device (3, 4) two beams of ultrasound, detecting the echoes of these beams reflected by the rail and positioning said member (1) according to the difference in the distance travelled by the two beams, characterized in that the device (3, 4) emitting the two beams of ultrasound is placed in acoustic contact with the rail, in that the two beams of ultrasound are emitted through the rail head (2) with a predetermined angle ($2\alpha$) between them, in that said predetermined angle ($2\alpha$) is selected in such a manner that the two beams of ultrasound be substantially perpendicular to the fishing surfaces of the rail (5) and reflected by these surfaces (5), in that the time of travel ($t_1$, $t_2$) of each one of the two beams from their emission to the reception of the echo is determined, in that the difference Δt between said times of travel of the two beams is used to generate a first signal, the value of which is proportional to said difference (Δt) and which is influenced neither by the absolute value of the time of travel ($t_1$, $t_2$) of said beams, nor by the thickness or the wear (u) of the rail head (2), and in that this first signal is used for generating a control signal for positioning transversally said member.

2. A process according to claim 1, characterized in that the generation of the control signal for the positioning is carried out by adding a set signal (x) to said first signal.

3. A process according to claim 1 or 2, characterized in that this control signal for the positioning is compared with a threshold value (S) and in that this control signal for said positioning is used only if its value exceeds the threshold value (S).

4. A process according to claim 3, characterized in that the control signal delivered is amplified by an amplifier, the output of which actuates a valve (10) controlling the positioning of said member by means of a jack (11).

5. A process according to one of claims 1 to 4, characterized in that use is made for the centering on the plane of symmetry (T) of a rail, of at least one ultrasonic sensor sounding the rail.

6. A process according to one of claims 1 to 5, characterized in that each beam of ultrasound consists of a train of pulses.

7. A process according to claim 6, characterized in that the trains of ultrasound are synchronized.

8. A device for carrying out the process according to claim 1, characterized in that it includes a guiding carriage (18) running on the rail and provided with a support (1) which can move transversally with respect to the longitudinal axis of the rail and which carries a servosensor (3, 4) in acoustic contact with the rail; in that it includes displacement means (10, 11) for the support (1) for its transverse motion; and in that the servosensor includes two transreceivers (3, 4) forming an angle of (2α) between them, in acoustic contact with the rail, and emitting beams of ultrasound through the rail head (2) substantially perpendicularly to the fishing surfaces of the rail (5) on which they are reflected, their echoes being received by said transreceiver (3, 4); as well as a control loop (6, 9) controlling the displacement means (10, 11) for the support (1) through a signal which is function of the difference in the time of travel between the emission and the reception of the echo of the two beams of ultrasound.

9. A device according to claim 8, characterized in that the support (1) carries an ultrasonic sensor for sounding the rail.

10. A device according to claim 8 or claim 9, characterized in that the control loop carries a comparator (6) delivering a signal corresponding to the difference of the time of travel (Δt) fed to an adder (7) introducing a set value and delivering a control signal [f(x) + Δt].

11. A device according to claim 10, characterized in that the control loop further includes an inhibitor suppressing the control signal as long as its value is less than a preset threshold value (S).

**Patentansprüche**

1. Verfahren, um ein entlang einer Eisenbahnschiene (2) bewegtes Organ (1) quer zur Symmetrieebene (T) dieser Schiene zu positionieren, indem vermittels einer Vorrichtung (3, 4) zwei Ultraschallwellenbündel ausgesendet und die Echos der von der Schiene zurückgeworfenen Wellen aufgefangen werden und das benannte Organ (1) in Abhängigkeit von der Differenz der von den beiden Wellenbündeln durchlaufenen Distanzen positioniert wird, dadurch gekennzeichnet, dass die Vorrichtung (3, 4), die die beiden Ultraschallwellenbündel aussendet, in akustischer Berührung mit der Schiene angeordnet wird, dass die beiden Ultraschallwellenbündel mit einem vorbestimmten gegenseitigen Winkel (2α) durch den Schienenkopf gesendet und der benannte vorbestimmte Winkel (2α) so gewählt wird, dass die beiden Ultraschallwellenbündel im wesentlichen senkrecht zu den Basisflächen (5) des Schienenkopfs sind und von diesen Flächen (5) reflektiert werden, dass die Laufzeiten ($t_1$, $t_2$) der beiden Wellenbündel zwischen ihrer Aussendung und dem Empfang ihrer Echos bestimmt werden, dass aus der Differenz (Δt) zwischen den benannten Laufzeiten der Wellenbündel ein erstes Signal gebildet wird, das der benannten Differenz (Δt) proportional ist und weder vom Absolutwert der Laufzeiten ($t_1$,

$t_2$) der benannten Wellenbündel noch von der Dicke oder Abnutzung ($u$) des Schienenkopfes (2) beeinflusst wird, und dass dieses erste Signal dazu benutzt wird, ein Steuersignal zur Querpositionierung des benannten Organs abzuleiten.

2.  Verfahren gemäss Anspruch 1, dadurch gekennzeichnet, dass die Ableitung des Positioniersteuersignals durch Addieren eines Sollsignals ($x$) zu dem benannten ersten Signal geschieht.

3.  Verfahren gemäss Anspruch 1 oder 2, dadurch gekennzeichnet, dass das Positioniersteuersignal mit einem Schwellenwert ($S$) verglichen wird und dieses Steuersignal nur dann für die benannte Positionierung verwendet wird, wenn sein Wert über dem Schwellenwert ($S$) liegt.

4.  Verfahren gemäss Anspruch 3, dadurch gekennzeichnet, dass das abgegebene Steuersignal durch einen Verstärker verstärkt wird, dessen Ausgangssignal ein Ventil (10) steuert, das wiederum die Positionierung des benannten Organs mittels einer Winde (11) steuert.

5.  Verfahren gemäss einem der Ansprüche 1 bis 4, dadurch gekennzeichnet, dass es zur Zentrierung mindestens einer Ultraschall-Schienenprüfsonde relativ zur Symmetrieebene (T) einer Schiene verwendet wird.

6.  Verfahren gemäss einem der Ansprüche 1 bis 5, dadurch gekennzeichnet, dass jedes der Ultraschallwellenbündel aus einer Pulsfolge besteht.

7.  Verfahren gemäss Anspruch 6, dadurch gekennzeichnet, dass die Ultraschallwellen-Pulsfolgen synchronisiert sind.

8.  Vorrichtung zur Realisierung des Verfahrens gemäss Anspruch 1, dadurch gekennzeichnet, dass sie einen auf der Schiene rollenden, mit einem Träger (1) versehenen Führungswagen (18) umfasst, wobei der Träger quer zur Schienenlängsachse verschoben werden kann und eine Steuersonde (3, 4) in akustischer Berührung mit der Schiene trägt; dass sie Organe (10, 11) zur Verschiebung des Trägers (1) bei Querbewegungen umfasst; dass die Steuersonde zwei Sende-Empfangs-Umformer (3, 4) umfasst die zwischen sich einen Winkel ($2\alpha$) bilden, akustisch mit der Schiene in Berührung stehen und Ultraschallwellenbündel durch den Schienenkopf (2) im wesentlichen senkrecht zu dessen Basisflächen (5), an denen sie reflektiert werden, aussenden, wobei ihre Echos durch den benannten Sende-Empfangs-Umformer (3, 4) aufgefangen werden; und dass die Vorrichtung auch einen Regelkreis (6 bis 9) umfasst, der die Organe (10, 11) zur Verschiebung des Trägers (1) gemäss einem Signal steuert, das eine Funktion der Zeitdifferenz zwischen Aussenden und Echoempfang der beiden Ultraschallwellenbündel ist.

9.  Vorrichtung gemäss Anspruch 8, dadurch gekennzeichnet, dass der Träger (1) Ultraschallsonden zur Schienenprüfung trägt.

10.  Vorrichtung gemäss Anspruch 8 oder Anspruch 9, dadurch gekennzeichnet, dass der Regelkreis einen Komparator (6) umfasst, der ein Signal liefert, das der Laufzeitdifferenz ($\Delta t$) entspricht und eine Addiereinrichtung (7) versorgt, durch das ein Sollwert hinzugefügt und ein Steuersignal [$f(x) + \Delta t$] geliefert wird.

11.  Vorrichtung gemäss Anspruch 10, dadurch gekennzeichnet, dass der Regelkreis noch eine Sperre umfasst, die das Steuersignal unterdrückt, sofern sein Wert unter einem vorbestimmten Schwellenwert ($S$) liegt.

FIG. 1

FIG. 2

FIG. 3

FIG. 4

FIG. 5

FIG. 6

FIG. 7